# EUROPÄISCHE PATENTSCHRIFT

(11) **EP 1 423 901 B1**
(45) Veröffentlichungstag und Bekanntmachung des Hinweises auf die Patenterteilung: **07.01.2015**
(21) Anmeldenummer: 02762242.2
(22) Anmeldetag: 17.08.2002
(51) Int. Cl.: H02K 5/20

(54) **GEHÄUSE EINER LICHTMASCHINE**
GENERATOR HOUSING
BOITIER D'ALTERNATEUR

(30) Priorität: 28.08.2001 DE 10141891
(43) Veröffentlichungstag der Anmeldung: 02.06.2004
(73) Patentinhaber: ROBERT BOSCH GMBH, 70442 Stuttgart (DE)
(72) Erfinder: BALLMANN, Thomas, 71717 Beilstein (DE); KNAPPENBERGER, Uwe, 75417 Muehlacker (DE); GARAS, Minas, 3201 Carrum Downs Viktoria (AU)
(86) Internationale Anmeldenummer: PCT/DE2002/003033
(87) Internationale Veröffentlichungsnummer: WO 2003/026096

(56) Entgegenhaltungen:
- EP-A- 1 199 786
- DE-A- 10 039 486
- DE-A- 19 624 519
- US-A- 5 220 233

## Beschreibung

### Stand der Technik

Die Erfindung betrifft eine elktrische Maschine, insbesondere einen Generator nach der Gattung des unabhängigen Anspruchs. Aus der französischen Offenlegungsschrift FR 2717638 A 1 ist eine als Generator ausgeführte elektrische Maschine bekannt.

Diese elektrische Maschine umfasst ein mehrteiliges Gehäuse, in dem ein Ständer befestigt ist und einen als Klauenpolläufer ausgeführten Läufer, der mittels zweier Lager in zwei Gehäuseteilen gelagert ist. Das Gehäuse der elektrischen Maschine weist zwei verschiedene axiale Stirnseiten auf, wobei eine erste Stirnseite eine sogenannte Antriebsseite ist, über die der Läufer üblicherweise mittels einer Riemenscheibe antreibbar ist. Die zweite Stirnseite trägt unter einer Schutzkappe einen Gleichrichter und einen Regler.

Diese Maschine wird einerseits mittels einer Flüssigkeitskühlung und andererseits mittels Luftkühlung gekühlt. Die Luftkühlung erfolgte dabei mittels eines Lüfters, der durch Öffnungen in der reglerseitigen Gehäusestirnfläche Luft ansaugt und diese angesaugte Luft durch das Läufersystem hindurchdrückt. Die Kühlluft tritt dabei auf der Antriebsseite durch um das antriebsseitige Lager herum angeordnete

Öffnungen aus. Diese Kühlluft dient einerseits dazu, den Regler und den Gleichrichter unter der Abdeckkappe zu kühlen und andererseits den Läufer und die nach innen gerichtete Oberfläche des Ständerpakets sowie die ebenfalls nach innen gerichteten Oberflächen der Wicklungsköpfe zu kühlen.

Das Gehäuse besteht aus insgesamt drei Teilen und umfaßt ein antriebsseitiges Lagerschild, das im wesentlichen scheibenförmig ist, ein topfseitiges bürstenseitiges Lagerschild und ein drittes Gehäuseteil, das ebenfalls topfartig ausgebildet ist und mit seiner Innenseite den Ständer aufnimmt.

Die drei Gehäuseteile sind allesamt durch am Außenumfang des Gehäuses verteilte, in axialer Richtung sich erstreckende und auf der Antriebsseite des Generators angeordnete Schrauben miteinander verbunden. Nachteilig ist bei dieser Konstruktion, dass entweder der ganze Generator zunächst zusammenmontiert werden muss, um eine Dichtigkeitsprüfung vornehmen zu können, oder dass das topfförmige Außengehäuse mit dem den Ständer aufnehmenden Innengehäuse separat verspannt werden muss, um eine Dichtigkeitsprüfung vornehmen zu können. Nach der Dichtigkeitsprüfung muss dann diese separate Vorspannung wieder gelöst werden, um das antriebsseitige Lagerschild mit den beiden den Kühlkanal begrenzenden Gehäuseteilen montieren zu können.

Aus der DE 196 24 519 A und der der US 5220233 A ist jeweils eine elektrische Maschine bekannt, die durch einen Flüssigkeitskühlkreislauf kühlbar ist. Gehäuseteile begrenzen des Kreislauf.

### Vorteile der Erfindung

Mit der erfindungsgemäßen elektrischen Maschine mit den Merkmalen des unabhängigen Anspruchs ist es möglich, auf einer Montagelinie eine Dichtigkeitsprüfung der den Kühlkanal begrenzenden Gehäuseteile vornehmen zu können und anschließend die Montage fortzuführen, ohne die für die Dichtigkeitsprüfung miteinander verspannten Gehäuseteile wieder auseinandermontieren zu müssen. Fügt man zudem das erste Gehäuseteil oder das zweite Gehäuseteil so aus, dass es eine Lageraufnahme bzw. Nabe hat, so erspart man sich ein weiteres Gehäuseteil zur Lageraufnahme.

Durch die in den Unteransprüchen aufgeführten Merkmale sind weitere vorteilhafte Ausgestaltungen der Maschine nach dem Hauptanspruch möglich.

Führt man das erste Gehäuseteil mit einem nach radial innen gerichteten Flansch aus, an dem das zweite Gehäuseteil befestigt ist, so ist eine Verspannung bzw. Montage beider Gehäuseteile möglich, ohne den Außendurchmesser des ersten Gehäuseteils und damit der ganzen Maschine zu vergrößern. Der benötigte Bauraum der elektrischen Maschine wird dadurch verringert.

Führt man das zweite Gehäuseteil mit einem nach außen gerichteten Flansch aus, an dem das erste Gehäuseteil befestigt ist, so führt dies zu einer einfachen nahezu zylindrischen Form des ersten Gehäuseteils, das dadurch verhältnismäßig günstig zu bearbeiten ist. Gleichfalls ist dadurch der Wärmeübergang vom zweiten Gehäuseteil in Richtung zur ersten axialen Seite günstiger, da eine Fuge zwischen erstem und zweiten Gehäuseteil entfällt.

Führt man auf der ersten axialen Seite die Dichtfuge zwischen dem ersten und dem zweiten Gehäuseteil so aus, dass sie in radialer Richtung orientiert ist, so lässt sich die benötigte Dichtwirkung zwischen dem ersten und dem zweiten Gehäuseteil einfach verwirklichen. Führt man auf der zweiten axialen Seite die Dichtfuge zwischen dem ersten und zweiten Gehäuseteil so aus, dass sie im Wesentlichen zylindermantelförmig ausgebildet ist, so lässt sich eine Dichtungswirkung erzielen, die unabhängig von der Vorspannung zwischen den zwei Gehäuseteilen ist. Es ergeben sich so keine Rückwirkungen auf die Dichtfuge auf der ersten axialen Seite.

Eine verbesserte Dichtwirkung in der zylindermantelförmigen Dichtfuge kann dadurch erreicht werden, dass das befestigte Gehäuseversteifungsteil so ausgebildet ist, dass es auf die Dichtfuge eine die Dichtwirkung unterstützende Kraft bewirkt.

### Zeichnungen

Fig. 1 zeigt einen Teillängsschnitt der elektrischen Maschine nach einem ersten Ausführungsbeispiel,
Fig. 1A zeigt eine Variante der Dichtfuge auf der ersten axialen Seite,
Fig. 2 zeigt einen Teillängsschnitt durch eine elektrische Maschine nach einem zweiten Ausführungsbeispiel,
Fig. 3 zeigt im Längsschnitt einen Ausschnitt der Dichtung zwischen dem ersten und dem zweiten Gehäuseteil im Bereich der zweiten axialen Seite in einer Variante,
Fig. 4 zeigt ausschnittsweise die Anbindung zwischen dem ersten und dem zweiten Gehäuseteil im Bereich der Dichtung auf der ersten axialen Seite.

Identische bzw. gleichwirkende Bauteile sind mit gleichen Bezugszahlen bezeichnet.

### Beschreibung der Ausführungsbeispiele

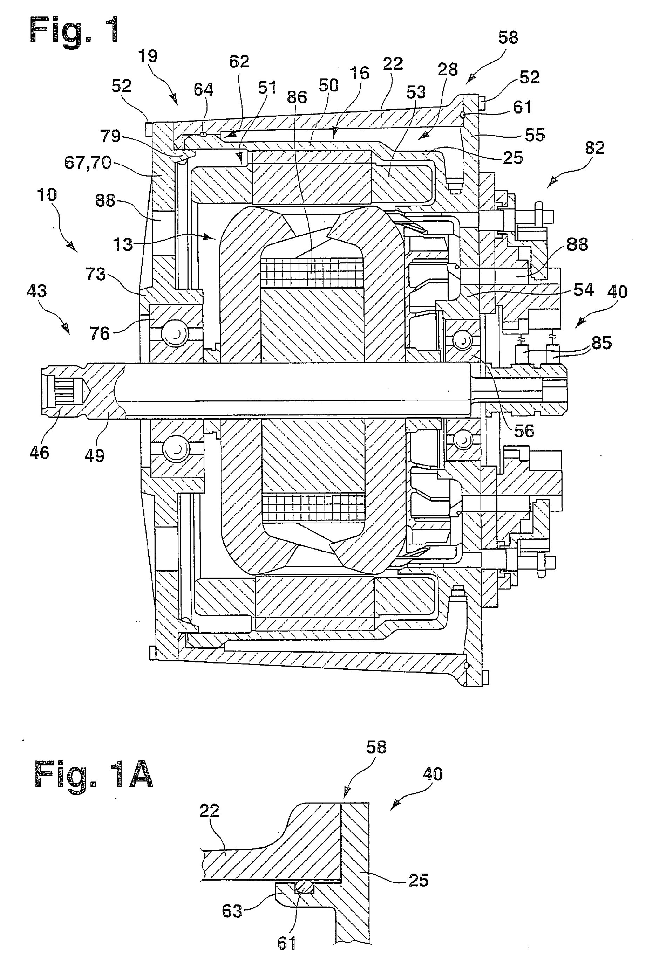

In Fig. 1 ist als Ausführungsbeispiel einer erfindungsgemäßen elektrischen Maschine 10 ein Generator für Kraftfahrzeuge dargestellt. Die elektrische Maschine 10 hat als elektrisch wirksame Teile einen Läufer 13 und einen Ständer 16, die beide in einem Gehäuse 19 angeordnet sind. Das Gehäuse 19 hat ein erstes Gehäuseteil 22 und ein zweites Gehäuseteil 25. Das zweite Gehäuseteil 25 ist radial innerhalb des ersten Gehäuseteils 22 angeordnet und begrenzt mit dem ersten Gehäuseteil 22 einen Flüssigkeitskühlkreislauf 28 der elektrischen Maschine 10. Mittels dieses Flüssigkeitskühlkreislaufs 28, der um den Umfang des Ständers 26 herumgeführt ist, ist die elektrische Maschine kühlbar.

Die in Fig. 1 dargestellte elektrische Maschine hat zwei axiale Seiten, die in eine erste axiale Seite 40 und eine zweite axiale Seite 43 unterschieden werden. Einerseits in die erste axiale Seite 40, in Fig. 1 die rechte Seite - bei schleifringbehafteten Generatoren auch Bürstenseite genannt - und andererseits in die zweite axiale Seite 43. Sie ist der ersten axialen Seite 40 gegenüberliegend und wird bei Generatoren üblicherweise auch Antriebsseite genannt, da über diese Seite und ein dortiges Wellenende 46 einer Läuferwelle 49 des Läufers 13 üblicherweise die Momentenübertragung stattfindet.

Das zweite Gehäuseteil 25 ist im Wesentlichen topfförmig ausgebildet und nimmt mit einem zylindrischen Bereich 50 den Ständer 16 auf. Eine Ständerwicklung 51 weist an beiden axialen Enden des Ständers je einen Wickelkopf 53 auf, wobei der zur ersten axialen Seite gerichtete Wickelkopf 53 vom zweiten Gehäuseteil 25 umgriffen ist. Das zweite Gehäuseteil 25 weist darüber hinaus eine nach radial innen gerichtete Lageraufnahme 54 auf, die ein Lager 56 aufnimmt, mit dem die Läuferwelle 49 abgestützt ist.

Das erste und das zweite Gehäuseteil 22 bzw. 25 sind auf der ersten axialen Seite 40 miteinander verspannt. Die die Verspannung beider Gehäuseteile 22 und 25 bewirkenden Verspannungselemente 52 - beispielsweise Schrauben - sind am Außenumfang eines nach außen gerichteten Flanschs 55 des zweiten Gehäuseteils 25 angeordnet. Die Stelle, an der das erste Gehäuseteil 22 und das zweite Gehäuseteil 25 miteinander verspannt sind, stellt eine Dichtfuge 58 dar, in die ein Dichtelement 61 eingebracht ist. Die Dichtfuge 58 ist in radialer Richtung orientiert.

Fig. 1A zeigt eine Variante der Dichtfuge 58 auf der ersten axialen Seite 40. Das Dichtelement 61 ist dabei in einem zylindrisch ausgebildeten Abschnitt der Dichtfuge 58 angeordnet und wird von einem sich axial erstreckenden Vorsprung 63 an die im wesentlichen zylindrische Innenseite des Gehäuseteils 22 gedrückt.

Auf der zweiten axialen Seite 43 sind das erste und das zweite Gehäuseteil 22 bzw. 25 ebenfalls dichtend gefügt. Im gezeigten Ausführungsbeispiel hat eine dortige Dichtfuge 62 eine zumindest im Wesentlichen zylindermantelförmige Form, in die ebenfalls ein Dichtelement 64 eingebracht ist. Die Dichtwirkung in der Dichtfuge 62 wird bei einer vormontierten Baugruppe mit den beiden Gehäuseteilen 22 und 25 dem Dichtelement 64 und zunächst lediglich durch eine gewisse radiale mechanische Spannung in der Dichtfuge 62 erreicht, so dass diese vormontierte Baugruppe bereits auf Dichtigkeit überprüfbar ist und diese nicht mehr demontiert werden muss.

Nach der Vormontage dieser Baugruppe aus den beiden Gehäuseteilen 22 und 25 und den Dichtelementen 61 und 64, wird an die zweite axiale Seite des Gehäuses 19 ein Gehäuseversteifungsteil 67 montiert, zu dessen Montage die Verspannung der vormontierten Baugruppe zuvor nicht gelöst werden braucht. Das Gehäuseversteifungsteil 67 wird ebenfalls mit Verspannungelementen 52 am Gehäuse 19 montiert. Das Gehäuseversteifungsteil 67 kann - wie in Fig. 1 dargestellt - ein Lagerschild 70 sein, das an seinem nach radial innen gerichteten Ende eine Lageraufnahme 73 aufweist. Die Lageraufnahme 73 dient dazu, ein Lager 76 aufzunehmen und über dieses Lager 76 die Läuferwelle 49 abzustützen.

Das Gehäuseversteifungsteil 67 weist im Bereich der Anbindung des Gehäuseversteifungsteils 67 an das erste und zweite Gehäuseteil 22 und 25 einen zylinderringartigen Vorsprung 79 auf, der zur ersten axialen Seite 40 gerichtet ist. Dieser axiale Vorsprung 79 unterstützt die Dichtwirkung in der Dichtfuge 62, in dem dieser Vorsprung 79 so bemessen ist, dass dieser nach radial außen eine Kraft bewirkt, die auf das zweite Gehäuseteil 25 und damit auf das Dichtelement 64 drückt.

Ist die elektrische Maschine 10 wie in Fig. 1 dargestellt als Generator ausgebildet, so ist an der ersten axialen Seite 40 des Gehäuses 19 üblicherweise ein Regler und auch ein Gleichrichter 82 angeordnet. Über den Regler wird dann mittels zweier Bürsten 85 eine Erregerwicklung 86 des Läufers 13 bestromt.

Zur besseren Kühlung der elektrischen Maschine 10 sind sowohl im Gehäuseversteifungsteil 67 als auch im zweiten Gehäuseteil 25 Kühlmittelöffnungen 88 vorhanden, die eine Durchströmung der elektrischen Maschine 10 mit einem gasförmigen Kühlmittel ermöglichen.

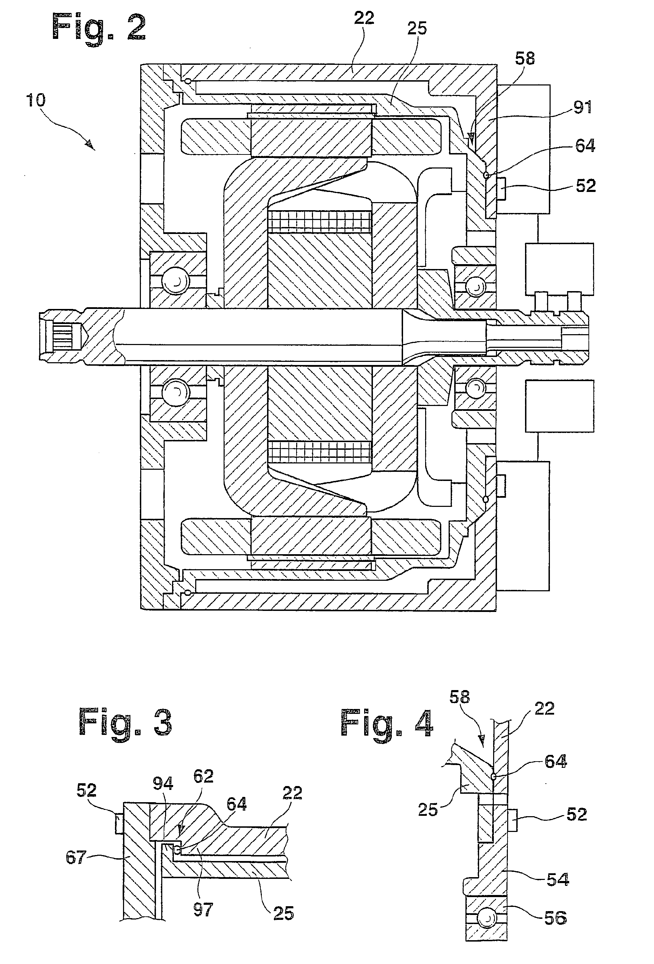

In Fig. 2 ist ein zweites Ausführungsbeispiel der elektrischen Maschine 10 dargestellt, wobei nachfolgend nun noch auf die wesentlichen Unterschiede eingegangen wird. Im Unterschied zum ersten Ausführungsbeispiel weist das erste Gehäuseteil 22 einen nach radial innen gerichteten Flansch 91 auf, an den das zweite Gehäuseteil 25 mittels Verspannungselementen 52 befestigt ist. Zwischen dem ersten und dem zweiten Gehäuseteil 22 und 25 ist auch hier eine Dichtfuge 58 vorhanden, die wiederum in radialer Richtung orientiert ist und wiederum ein Dichtelement 64 aufweist.

In Fig. 3 ist ausschnittsweise die Dichtfuge 62 an der zweiten axialen Seite 43 in einer Variante dargestellt. Während in den bisherigen Ausführungsbeispielen die Dichtfuge 61 an der zweiten axialen Seite 43 unabhängig von den Befestigungskräften zwischen dem ersten und dem zweiten Gehäuseteil 22 und 25 ist, ist in dieser Variante die Dichtwirkung zwischen dem ersten und dem zweiten Gehäuseteil 22 und 25 abhängig von der Vorspannung zwischen dem ersten und dem zweiten Gehäuseteil an der ersten axialen Seite 40 bzw. abhängig von den tatsächlichen Maßen der einzelnen Gehäuseteile. Die Dichtfuge 62 ist wie die Dichtfuge 58 ebenfalls radial orientiert, so dass auf das Dichtelement 64 eine axiale Kraft wirkt, die von einem Bund 94 des zweiten Gehäuseteils 25 auf einen Absatz 97 des ersten Gehäuseteils 22 übertragen wird.

Während im Ausführungsbeispiel nach Fig. 2 das zweite Gehäuseteil 25 eine Lageraufnahme 54 wie bereits das Ausführungsbeispiel nach Fig. 1 aufweist, so kann das zweite Ausführungsbeispiel bezüglich der Lageraufnahme 54 auch in einer abgewandelten Form ausgebildet sein. In Fig. 4 ist dargestellt, dass auch das erste Gehäuseteil 22 mit einer Lageraufnahme 54 ausgebildet sein kann, die das Lager 56 auf der ersten axialen Seite 40 aufnimmt.

Das erste Gehäuseteil 22 oder das zweite Gehäuseteil 25 können auch jeweils durch mehrteilige Gehäuseteile ersetzt sein, mit denen sich der Erfindungsgedanke verwirklichen lässt.

## Patentansprüche

1. Elektrische Maschine, insbesondere Generator für Kraftfahrzeuge, mit einem in einem Gehäuse (19) gelagerten Läufer (13) und einem Ständer (16), wobei der Ständer (16) mittels eines Flüssigkeitskühlkreislaufs (28) kühlbar ist, der um den Umfang des Ständers (16) herumgeführt ist und der durch zumindest ein erstes und ein zweites Gehäuseteil (22, 25) der elektrischen Maschine (10) begrenzt ist, die zumindest zwei Gehäuseteile (22, 25) an einer ersten axialen Seite (40) miteinander verspannt und zu einer dichten vormontierten Baugruppe gefügt sind, **dadurch gekennzeichnet, dass** an einer zweiten axialen Seite (43) ein Gehäuseversteifungsteil (67) befestigt ist und das erste Gehäuseteil (22) oder das zweite Gehäuseteil (25) eine Lageraufnahme (54) hat.

2. Elektrische Maschine nach Anspruch 1, **dadurch gekennzeichnet, dass** das erste Gehäuseteil (22) einen nach radial innen gerichteten Flansch (91) aufweist, an dem das zweite Gehäuseteil (25) befestigt ist.

3. Elektrische Maschine nach Anspruch 1, **dadurch gekennzeichnet, dass** das zweite Gehäuseteil (25) einen nach außen gerichteten Flansch (55) hat, an dem das erste Gehäuseteil (22) befestigt ist.

4. Elektrische Maschine nach einem der vorhergehenden Ansprüche, **dadurch gekennzeichnet, dass** das Gehäuseversteifungsteil (67) ein Lagerschild (70) ist.

5. Elektrische Maschine nach einem der vorhergehenden Ansprüche, **dadurch gekennzeichnet, dass** eine Dichtfuge (58) zwischen dem ersten und dem zweiten Gehäuseteil (22, 25) auf der ersten axialen Seite (40) in radialer Richtung orientiert ist.

6. Elektrische Maschine nach einem Ansprüche 1 bis 4, **dadurch gekennzeichnet, dass** eine Dichtfuge (58) zwischen dem ersten und dem zweiten Gehäuseteil (22, 25) auf der ersten axialen Seite (40) in axialer Richtung orientiert ist.

7. Elektrische Maschine nach einem der vorhergehenden Ansprüche, **dadurch gekennzeichnet, dass** eine Dichtfuge (62) zwischen dem ersten und dem zweiten Gehäuseteil (22, 25) auf der zweiten axialen Seite (43) im Wesentlichen zylindermantelförmig ausgebildet ist.

8. Elektrische Maschine nach einem der vorhergehenden Ansprüche, **dadurch gekennzeichnet, dass** die im Wesentlichen zylindermantelförmige Dichtfuge (62) durch das befestigte Gehäuseversteifungsteil (67) mit einer eine Dichtwirkung unterstützenden Kraft belastet ist.

## Claims

1. Electrical machine, in particular generator for motor vehicles, having a rotor (13), which is mounted in a housing (19), and a stator (16), wherein the stator (16) can be cooled by means of a liquid cooling circuit (28) which is routed around the periphery of the stator (16) and which is bounded by at least a first and a second housing part (22, 25) of the electrical machine (10), the at least two housing parts (22, 25) being clamped to one another on a first axial side (40) and being joined to form a leak-tight preassembled module, **characterized in that** a housing reinforcement part (67) is fastened to a second axial side (43), and the first housing part (22) or the second housing part (25) has a bearing receptacle (54).

2. Electrical machine according to Claim 1, **characterized in that** the first housing part (22) has a radially inwardly directed flange (91) to which the second housing part (25) is fastened.

3. Electrical machine according to Claim 1, **characterized in that** the second housing part (25) has an outwardly directed flange (55) to which the first housing part (22) is fastened.

4. Electrical machine according to one of the preceding claims, **characterized in that** the housing reinforcement part (67) is an end plate (70).

5. Electrical machine according to one of the preceding claims, **characterized in that** a sealing joint (58) between the first and the second housing part (22, 25) on the first axial side (40) is oriented in the radial direction.

6. Electrical machine according to one of Claims 1 to 4, **characterized in that** a sealing joint (58) between the first and the second housing part (22, 25) on the first axial side (40) is oriented in the axial direction.

7. Electrical machine according to one of the preceding claims, **characterized in that** a sealing joint (62) between the first and the second housing part (22, 25) on the second axial side (43) is substantially in the form of a cylindrical casing.

8. Electrical machine according to one of the preceding claims, **characterized in that** the sealing joint (62) which is substantially in the form of a cylindrical casing is loaded with a force, which assists a sealing effect, by the fastened housing reinforcement part (67).

## Revendications

1. Machine électrique, en particulier générateur pour véhicules automobiles, comprenant un rotor (13) monté dans un boîtier (19) et un stator (16), le stator (16) pouvant être refroidi au moyen d'un circuit de refroidissement de liquide (28) qui est guidé autour de la périphérie du stator (16) et qui est limité par au moins une première et une deuxième partie de boîtier (22, 25) de la machine électrique (10), les au moins deux parties de boîtier (22, 25) étant serrées l'une contre l'autre au niveau d'un premier côté axial (40) et raccordées pour former un module pré-monté étanche, **caractérisée en ce qu'**une partie de renforcement de boîtier (67) est fixée à un deuxième côté axial (43), et la première partie de boîtier (22) ou la deuxième partie de boîtier (25) présente un logement de palier (54).

2. Machine électrique selon la revendication 1, **caractérisée en ce que** la première partie de boîtier (22) comprend une bride (91) tournée radialement vers l'intérieur, à laquelle la deuxième partie de boîtier (25) est fixée.

3. Machine électrique selon la revendication 1, **caractérisée en ce que** la deuxième partie de boîtier (25) comprend une bride (55) tournée vers l'extérieur, à laquelle la première partie de boîtier (22) est fixée.

4. Machine électrique selon l'une quelconque des revendications précédentes, **caractérisée en ce que** la partie de renforcement de boîtier (67) est un flasque (70).

5. Machine électrique selon l'une quelconque des revendications précédentes, **caractérisée en ce qu'**un joint d'étanchéité (58) entre la première et la deuxième partie de boîtier (22, 25) sur le premier côté axial (40) est orienté dans la direction radiale.

6. Machine électrique selon l'une quelconque des revendications 1 à 4, **caractérisée en ce qu'**un joint d'étanchéité (58) entre la première et la deuxième partie de boîtier (22, 25) sur le premier côté axial (40) est orienté dans la direction axiale.

7. Machine électrique selon l'une quelconque des revendications précédentes, **caractérisée en ce qu'**un joint d'étanchéité (62) entre la première et la deuxième partie de boîtier (22, 25) sur le deuxième côté axial (43) est réalisé essentiellement en forme d'enveloppe cylindrique.

8. Machine électrique selon l'une quelconque des revendications précédentes, **caractérisée en ce que** le joint d'étanchéité (62) essentiellement en forme d'enveloppe cylindrique est sollicité au moyen de la partie de renforcement de boîtier (67) fixée par une force favorisant un effet d'étanchéité.
